# EUROPEAN PATENT APPLICATION

(11) **EP 1 801 950 A2**
(43) Date of publication of application: **27.06.2007**
(21) Application number: 06026555.0
(22) Date of filing: 21.12.2006
(51) Int. Cl.: H02J 13/00

(54) **Distributed generation control system and method**

(30) Priority: 21.12.2005 GB 0525987
(71) Applicant: Virtutility Limited, Belfast BT1 2DX (GB)
(72) Inventor: McCartney, Allen, Belfast Northern Ireland BT5 6PS (GB); Hart, Philipp John, Somerset BA9 9FB (GB)
(74) Representative: Wilson, Glen

(57) **Abstract**

A distributed electricity generation control system comprises a central processor (208) and a plurality of distributed processors (212a-e), each of which is associated with a respective electricity generator (204a-e) connected to a supply network (200). A communications channel (214) is established between each of the distributed processors (212a-e) and the central processor (208). The central processor (208) receives from each of the distributed processors (212a-e) data indicative of the operational status of the respective generator (204a-e) via the communications channel. The central processor (208) generates and sends control data to at least one of the distributed processors (212a-e) via the communications channel (214) dependent upon a demand for electricity. The distributed processor (212a-e) controls the operation of the respective generator (204a-e) associated therewith in response to the control data.

## Description

This invention relates to a distributed resource control system, device and method. More particularly, but not exclusively, it relates to distributed resource control system, device and method for distributed electricity generating units.

The generation of electricity for distribution via a supply network is typically achieved using large generation facilities such as large coal or oil fired power stations that can supply hundreds of megawatts of power to the supply network. However, should one of these facilities fall the supply network is significantly unbalanced due to the loss of a large amount of input power and a reserve is required to compensate for the imbalance in supply and demand.

One solution to this problem is the construction of an additional large generation facility that can supply electricity to the supply network should an existing generation facility fail. This represents an expensive solution to the problem and also has detrimental environmental effects due to the waste gases and the need for additional power lines to be constructed.

An alternative solution to the problem is the introduction into the supply network of distributed small scale electricity generators, such an arrangement is disclosed in a US patent application, publication number US 2002/0143438. Typically, these small scale generators are diesel generators that provide emergency standby electricity in the case of a loss of supply, for example in hospitals and factories. The small scale generators are often viewed a depreciating assert by their owners. Indeed, the cost of maintenance of a small scale generator is often considered to be a nuisance by the generator's owner.

The use of small scale generators into the supply network also allows fluctuations in the demand for electricity to be dealt with in a flexible, granular manner. For example, a large number of people switching a kettle on during a break in a popular television programme can cause a significant short term rise in demand. A conventional large scale generation facility introduced into the supply network to cope with the rise in demand would input far too much electricity to the supply network than is needed to cope with the short term rise in demand. This situation is wasteful and uneconomic. The solution currently used is to estimate a peak electricity supply demand and to oversupply the network with electricity, again this is a wasteful and uneconomic solution to the problem.

One problem associated with the introduction of small scale generators into the supply network is the command and control of the generators. US 2002/0143438 discloses the use of the Internet to control a distributed network of small generators. However, if the central control server faults the entire system is disabled. Additionally, the control of a distributed small scale generators across the Internet requires the transmission of significant amounts of data. This can reduce the efficiency of the command and control system at times of high data traffic across the Internet.

Also the loss of one, or more, of the small generators presents difficulties in maintaining the required power supply. This is because as the central control server has no way of detecting if any given small generator is available or not other than the amount of electricity being supplied to the supply network. This is the case whether the small generator fails mechanically, runs out of fuel or is offline for routine maintenance.

According to a first aspect of the present invention there is provided a distributed resource control system comprising:
a central processing means;
a plurality of distributed processing means each of which is associated with a respective distributed resource connected to a supply network; and
a communications channel between each of the distributed processing means and the central processing means;
the central processing means being arranged to receive from each of the distributed processing means data indicative of the operational status of the respective resource associated therewith via the communications channel, the central processing means being further arranged to generate control data to at least one of the plurality of distributed processing means via the communications channel dependent upon a demand for a resource, the at least one distributed processing means being arranged to control the operation of the respective resource associated therewith in response to the control data.

The monitoring of the operational status of a resource allows a central processing unit to more accurately match the required input to a supply network as the loss of a resource is noted and an appropriate compensatory resource brought into operation.

The communications channel may be the Internet, a secure dedicated virtual private network, or any other suitable data transmission network.

At least one of the distributed processing means may be associated with an electricity generation resource. The electricity generation resource may comprise any one, or combination, of the following: diesel generator, wind turbine, wave power generator, tidal flow, solar panel, or similar.

The electricity generated by a renewable energy source, for example a wind turbine, is often dependent upon the prevailing weather conditions. The dynamic monitoring of the status of a renewable energy source allows the optimal use of distributed electricity generating resources thereby encouraging the use of environmentally friendly, renewable energy sources.

The data indicative of the status of the resource may comprise data relating to any one, or combination, of the following: maintenance status, fault, fuel reserve, engine pressure, engine temperature, electrical parameters. Examples of electrical parameters include kVA, A, V, frequency, and power factor.

Each of the plurality of distributed processing means may present common interfaces to the central processing means and may be arranged to present a resource specific interface to the respective resource associated therewith.

A common interface with a central processing unit simplifies the data connection between the central processing unit and distributed processing units. The use of resource specific interfaces allows a large number of different resources to be connected to the central processing unit.

At least one of the distributed processing means may be arranged to process data indicative of a number of operating parameters of a respective distributed resource, to compare said data to entries in a data structure and to output data to the central processing means indicative of the operational status of the respective distributed resource via the communications channel.

The data output from the distributed processing means to the central processing means may comprise a reduced set of data indicative of the operational parameters of the respective resource received by the at least one distributed processing means.

Alternatively, or additionally, the data output from the processing means may be data indicative of the presence of the resource for use.

The processing of a large amount of parameter data at the distributed processor to provide a reduced data set for transfer over a network reduces the network traffic associated with operating the system. The use of presence based data, such as that used in instant messaging protocols, reduces the data transferred across the network to a minimum as any given distributed resource is either present or it is not.

The central processing means may be arranged to generate control data corresponding to a substantially optimal usage pattern of the distributed resources from the data indicative of the operating parameters of the at least one distributed resource and to control the input of at least one of the distributed resources into a distribution network in accordance with the substantially optimal usage pattern.

The central processing means may be arranged to compare data relating to the current use of the distributed resources with entries in a data structure relating to historical, or projected, use of the distributed resources in order to generate control data indicative of a substantially optimal projected usage pattern of the distributed resources.

The central processing means may comprise a data structure comprising data entries relating to the output capacity, usage restrictions, maintenance schedules, operational mode and operational role of at least one of the distributed resources and may process at least some of said data entries when generating control data indicative of either, or both, of substantially optimal usage or projected usage pattern of the distributed resources.
Examples of operational modes include synchronisable, demand replacement, load following. Examples of operational roles include reserve, peak lopping, and complementary generation.

According to a second aspect of the present invention there is provided a distributed resource control device comprising a processing means, first and second input-output (IO) interfaces, the first IO interface being arranged to interface with a specified distributed resource, or class of distributed resources, the second IO interface being arranged to interface with a central processing means arranged to receive data from a plurality of control devices, the processing means being arranged to process data indicative of a number of operating parameters of the distributed resource, to compare said data to entries in a data structure and to output data to the central processing means indicative of the operational status of the distributed resource.

The data output from the processing means to the central processing means may comprise a reduced set of data indicative of the operational parameters of the resource received by the one distributed processing means.

Alternatively, or additionally, the data output from the processing means may be data indicative of the presence of the resource for use.

The data indicative of the number of operating parameters of the resource may comprise data relating to any one, or combination, of the following: maintenance status, fault, fuel reserve, engine pressure, engine temperature, electrical parameters. Examples of electrical parameters include kVA, A, V, frequency, and power factor.

The resource may comprise an electricity generation resource. The electricity generation resource may comprise any one, or combination, of the following: diesel generator, wind turbine, wave power generator, tidal flow, solar panel, or similar.

According to a third aspect of the present invention there is provided a central processing means for use with at least one distributed resource control device according to the second aspect of the present invention comprising a processing means and an input-output (10) interface, the processing means being in communication with the IO) interface, the IO interface being arranged to receive data indicative of the operational status of the at least one distributed resource and the processing means being arranged to generate control data to be passed to the at least one distributed processing means dependent upon the content of the data indicative of the operational status of the at least one distributed resource.

The 10 interface may be arranged to provide a common interface with a plurality of distributed resource control devices. Each of the plurality of distributed resources may be different. Alternatively, there may be a group of substantially similar distributed resources and at least one distributed resource that is different therfrom.

The central processing means may be arranged to generate control data corresponding to a substantially optimal usage pattern of distributed resources from the data indicative of the operating status of the at least one distributed resource and to control the input of at least one of the distributed resources into a distribution network in accordance with the substantially optimal usage pattern.

The central processing means may be arranged to compare data relating to the current use of the distributed resources with entries in a data structure relating to historical, or projected, use of the distributed resources in order to generate control data indicative of a substantially optimal projected usage pattern of the distributed resources.

The central processing means may comprise a data structure comprising data entries relating to the output capacity, usage restrictions, maintenance schedules, operational modes and operational roles of at least one of the distributed resources and may process at least some of said data entries when generating control data indicative of either, or both, of substantially optimal usage or projected usage pattern of the distributed resources. Examples of operational modes include synchronisable, demand replacement, load following. Examples of operational roles include reserve, peak lopping, and complementary generation.

According to a fourth aspect of the present invention there is provided a method of controlling a distributed resource comprising the steps of:
i) collecting data relating to a number of operating parameters of the resource;
ii) processing said data to determine the operational status of the resource, local to the resource;
iii) generating status data indicative of the operational status of the resource based upon the processing of step (ii), local to the resource;
iv) transmitting the status data via a network to a central processor unit, the central processor unit being arranged to receive status data from at least one of a plurality of distributed resources;
v) determining at the central processor unit a sub-set of the plurality of distributed resources are required to satisfy either a current or a projected demand for the resources;
vi) generating control data for at least one of the plurality of distributed resources, local to the central processor unit;
vii) transmitting control data relevant to the resource via the network; and
viii)operating the resource selectively, dependent upon the control data transmitted in step(vii).

The method may comprise providing the resource in the form of an electricity supply resource.

The method may comprise presenting a common interface between each of the plurality of distributed resources and the central processor unit.

The method may comprise comparing the data of step (ii) to entries in a data structure at step (ii). The method may comprise transmitting a reduce set of data indicative of operating of the resource in step (iv). The method may comprise transmitting presence data in step (iv).

The method may comprise generating control data corresponding to a substantially optimal usage pattern of distributed resources in step (vi).

The method may comprise controlling the input of the resource into a distribution network.

The method may comprise comparing data relating to the current use of distributed resources with entries in a data structure relating to historical, or projected, use of the distributed resources and generating control data corresponding to a substantially optimal projected usage pattern of distributed resources in step (vi).

The method may comprise generating control data indicative of either, or both, of substantially optimal usage patterns of the distributed resources with reference to data entries in a data structure corresponding to at least one of the following: output capacity, usage restrictions, maintenance schedules, operational modes, operation roles.

Examples of operational modes include synchronisable, demand replacement, load following. Examples of operational roles include reserve, peak lopping, and complementary generation.

The invention will now be described, by way of example only, with reference to the accompanying drawings, in which:
Figure 1 is a graphical representation of typical electricity demand upon a supply network during a twenty four hour period;
Figure 2 is a schematic representation of a distributed resource control system according to an aspect of the present invention;
Figure 3 is a schematic representation of a distributed resource control device according to another aspect of the present invention; and
Figure 4 is a flowchart showing the steps of a method of controlling distributed resources according to an aspect of the present invention.

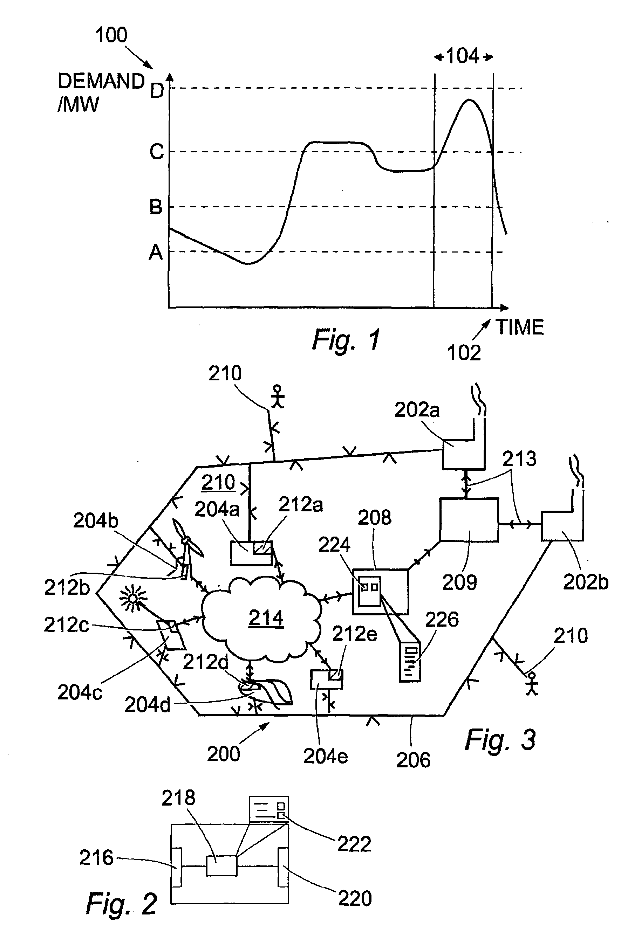

Referring now to Figure 1, the typical demand for electricity 100 over a twenty four hour period is shown varying against time 102. The present practice is to divide the demand 100 into levels A-D. Each of these levels A-D corresponds to a level of supply into a supply network, or grid. As can be seen from Figure 1 the level of demand 100 varies considerably over the twenty four hour period.

It is known to impose increased tariffs at times of peak usage 104 in order to reduce usage at this time by dissuading customers from using electricity. However, some electricity suppliers' customers of electricity have their own local, distributed, generators, for example a diesel generator. These generators are used by the customers at peak usage times 104 and result in an overcapacity of available electricity upon the network.

Referring now to Figures 2 and 3, an electricity supply network 200 comprises large electricity generation resources 202a, 202b, a number of small electricity generation resources 204a-e, infrastructure 206, a management station 208 and a control centre 209 that controls the supply of electricity to consumers 210.

The large electricity generation resources 202a, 202b are typically large oil, peat, coal, gas or nuclear powered power stations. These generation resources 202a, 202b are capable of supplying hundreds of megawatts of power to the infrastructure 206.

Infrastructure 206 such as transformers, switchgear, transmission and distribution lines links the generation resources 202a,b, 204a-e to the consumers 210.

A data network 214, based on Internet protocols, links management devices 212a-e at each of the small generation resources 204a-e to the management station 208.

The large generation resources 202a,b typically have dedicated communications channels 213, such as a virtual private network, linking them to the control centre 209. It is usual for any generation resource having a capacity of approximately 10MW or over to be linked to the control centre 209 via such a dedicated communications channel. Such resources can include large wind farms or the like.

Each management device 212a-e comprises a network interface 216, a processor 218 and a resource interface 220.

The network interface 216 acts to communicate; both transmit and receive, with the management station 208. Typically, the network interfaces 216 of the devices 212a-e will be configured to present a common interface to the management station 208 from all of the devices 212a-e. This reduces the complexity of data processing required at the management station 208.

The resource interface 220 is typically rendered specific to the type of small generator controller to which the management device 212a-e is fitted. For example, a specially programmed Linksys NSLU-2 can be used in a management device 212a that is used with a compatible diesel generator 204a, such as a Woodward 6000 controller. The use of resource specific interfaces allows data to be acquired that is tailored to the specific resource and reduces the need for the sampling of irrelevant data channels. The sampling of such irrelevant data channels increases the size of the data set to be processed thereby reducing the efficiency of the data processing of the management device.

Data typically sampled by the management device 212a-e includes information regarding the current operational status of the respective small generation resources 204a-e. This data can include data relating to the fuel status of a resource, for example a diesel generator may have only 15 minutes fuel left. The current speed and output of a resource is also typically sampled by the management device 212a-e, for example at a frequency of 1 Hz. Thus a large amount of resource specific parameter data is sampled and processed by the processor 218 of any one of the management devices 212a-e. The processor 218 compares the data to entries in a data structure 222 stored at the processor. These entries typically relate to thresholds of operating conditions, for example a speed below which the generator was idling and not producing electricity. Thus, the processor 218 determines which of the operating parameters of the resource 204a-e lie within acceptable operating parameters for the generation of electricity. Also, metrics such as the amount of fuel available to the resource 204a-e and how long this will last are computed by the processor 218.

In a preferred embodiment the processor determines a presence state for the resource 204a-e. Typical presence states may include "online", "offline", "about to go off-line" "fault", "Idling". These presence states are similar to those known from instant messaging protocols.

Data corresponding to the presence state is then transferred via the network interface 216 and the network 214 to the management station 208. The transfer of only presence state data across the network 214 reduces the amount of data transferred between the distributed resources 204a-e and the management station 208.

In a less optimal, but still preferred embodiment of the invention only that operating parameter data that is found to lie outside the operating thresholds by the respective resource management device 212a-e is transferred via the network 214 to the management station 208.

The processing of data at the resource management devices 212a-e reduces the amount of data that is required to be sent across the network thus increasing the remaining available bandwidth upon the network 214.

The control centre 209 monitors consumption of electricity across the infrastructure 206 by consumers 210.

The management station 208 comprises a server 224 that monitors the status of the remote resources 204a-e.

The server 224 comprises a data structure 226 that contains entries relating to the generating capacity of each of the small generation resources 204a-e, scheduled maintenance, allowed times of operation, operational mode such as synchromisable, demand replacement, load following and operational role such as reserve, peak lopping, and complementary generation.

The control centre 209 also monitors the operation of the large electricity generation resources 202a,b. At times of peak demand for electricity the control centre 209 determines, as closely as possible, the optimal usage of the large generation resources 202a,b.

There may be a peak demand that is beyond the capacity of the large generation resources 202a,b, or one of them may be off-line, for example, for maintenance.

Should this occur the control centre 209 communicates with the management station 208 regarding the bringing on-line of distributed resources 204a-e. The control centre 209 passes data to the management station 208 regarding the amount of electricity required. The server 224 determines which of the distributed resources 204a-e are required to satisfy the demand, with reference to the availability of the distributed resources 204a-e.

The management station 208 issues control data to those distributed resources required, present and available, to satisfy the demand to the infrastructure 206. Thus, the control centre 209 uses the management station 208 as a flexible virtual electricity resource rather than having to have direct control over the distributed resources 204a-e.

It is envisaged that the control centre 209 will comprise a terminal running software to interface to the management station 208 via a graphical user interface (GUI). The GUI will allow control centre staff to pre-schedule or manually engage the distributed resources as appropriate.

Further, it is also envisaged that certain trigger inputs monitored at the control centre 209, such as the failure of one of the large generation resources 202a,b, would engage a pre-determined amount of the distributed resources 204a-e; the exact identity of the specific distributed resources engaged being determined by the server 224 with reference to resource presence and availability data. The short start-up times of the distributed resources 204a-e means that the time from a request for electricity to supply entering the infrastructure 206 is much smaller than that for large generation resource start-up, for example it can be as little as two minutes compared with a typical start up time In the range of 10 minutes -16 hours for a large resource.

The server 224 can also be configured to forward schedule the use of the small generation resources 204a-e. For example, if only 80% of the small generation resources 204a-e are known to be available over a future twelve hour time period it may be necessary to make arrangements to source electricity from elsewhere in case of failure of one of the large generation resources 202a,b. This forward planning allows increased stability to be brought to electricity supply to the consumers 210.

Additionally, knowledge of the presence of each of the small generating resources 204a-e and their generation capacity by the server 224 at any given time increases the flexibility of the electricity supply network. For example, should all of the small generation resources 204a-e be available and one of the large generation resources 202a,b fails, data can be sent to each of the small generation resources to start them and input their electricity into the supply infrastructure 206. This reduces disruption to the electricity supply for the consumers 210.

The presence and availability of a resource to the supply infrastructure can increase the confidence in renewable energy sources, for example wind power. When using wind power the unpredictable and intermittent nature of the wind results in an erratic supply. This discourages the use of wind power. The ability to dynamically replace electricity lost from wind turbines, when the wind speed drops, from other sources increases the confidence in the use of wind power. Increased use of renewable energy sources has long term environmental benefits.

It will be appreciated that although shown as separate entities the management station 208 and the control centre 209 may be located within the same building. Also, the control centre 209 may comprise a sever operating as the management station 208, the server may also undertake some or all of the functions of the control centre 209 as described hereinbefore.

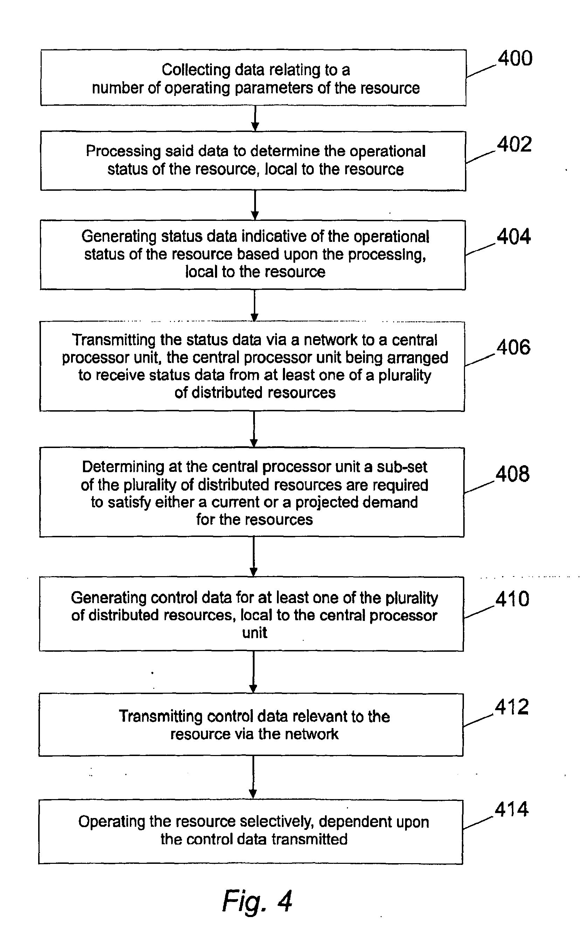

Referring now to Figure 4, a method of controlling a distributed resource comprises collecting data relating to a number of operating parameters of the resource (Step 400). The data is processed to determine the operational status of the resource, local to the resource (Step 402). Status data indicative of the operational status of the resource is generated, local to the resource (Step 404). The status data is transmitted via a network to a central processor unit, the central processor unit being arranged to receive status data from at least one of a plurality of distributed resources (Step 406). A sub-set of the plurality of distributed resources are required to satisfy either a current or a projected demand for the resources is determined at the central processor unit (Step 408). Control data for at least one of the plurality of distributed resources is generated, local to the central processor unit (Step 410). Control data relevant to the resource is transmitted via the network (Step 412). The resource is operated selectively, dependent upon the control data transmitted (Step 414).

## Claims

1. A distributed resource control system comprising:
a central processing means;
a plurality of distributed processing means each of which is associated with a respective distributed resource connected to a supply network; and
a communications channel between each of the distributed processing means and the central processing means;
the central processing means being arranged to receive from each of the distributed processing means data indicative of the operational status of the respective resource associated therewith via the communications channel, the central processing means being further arranged to generate control data and to communicate said control data to at least one of the plurality of distributed processing means via the communications channel dependent upon a demand for a resource, the at least one distributed processing means being arranged to control the operation of the respective resource associated therewith in response to the control data.

2. A system according to claim 1 wherein at least one of the distributed processing means is associated with an electricity generation resource.

3. A system according to claim 2 wherein the electricity generation resource comprises any one, or combination, of the following: diesel generator, wind turbine, wave power generator, solar panel.

4. A system according to any preceding claim wherein the communications channel is the Internet, a secure dedicated virtual private network, or any other suitable data transmission network.

5. A system according to any preceding claim wherein the data indicative of the status of the resource comprises data relating to any one, or combination, of the following: maintenance status, fault, fuel reserve.

6. A system according to any preceding claim wherein each of the plurality of distributed processing means is arranged to present common interfaces to the central processing means.

7. A system according to any preceding claim wherein each of the plurality of distributed processing means is arranged to present a resource specific interface to the respective resource associated therewith.

8. A system according to any preceding claim wherein at least one of the distributed processing means is arranged to process data indicative of a number of operating parameters of a respective distributed resource, to compare said data to entries in a data structure and to output data to the central processing means indicative of the operational status of the respective distributed resource via the communications channel.

9. A system according to any preceding claim wherein the data received at the central processing means from the distributed processing means comprises a reduced set of data indicative of the operational parameters of the respective resource received by the at least one distributed processing means.

10. A system according to any preceding claim wherein the data received at the central processing means from the distributed processing means comprises data indicative of the presence of the resource for use.

11. A system according to any preceding claim wherein the central processing means is arranged to generate control data corresponding to a substantially optimal usage pattern of the distributed resources from the data indicative of the operating parameters of the at least one distributed resource and to control the input of at least one of the distributed resources into a distribution network in accordance with the substantially optimal usage pattern.

12. A system according to any preceding claim wherein the central processing means is arranged to compare data relating to the current use of the distributed resources with entries in a data structure relating to historical, or projected, use of the distributed resources in order to generate control data indicative of a substantially optimal projected usage pattern of the distributed resources.

13. A system according to any preceding claim wherein the central processing means comprises a data structure comprising data entries relating to the output capacity, usage restrictions, maintenance schedules, of at least one of the distributed resources and to process at least some of said data entries when generating control data indicative of either, or both, of substantially optimal usage or projected usage pattern of the distributed resources.

14. A distributed resource control device comprising processing means, first and second input-output (10) interfaces, the first 10 interface being arranged to interface with a specified distributed resource, or class of distributed resources, the second lO interface being arranged to interface with a central processing means arranged to receive data from a plurality of control devices, the processing means being arranged to process data indicative of a number of operating parameters of the distributed resource, to compare said data to entries in a data structure and to output data to the central processing means indicative of the operational status of the distributed resource.

15. A device according to claim 14 wherein the data output from the processing means to the central processing means comprises a reduced set of data indicative of the operational parameters of the resource received by the one distributed processing means.

16. A device according to either claim 14 or claim 15 wherein the data output from the processing means is data indicative of the presence of the resource for use.

17. A device according to any one of claims 14 to 16 wherein the data indicative of the number of operating parameters of the resource comprises data relating to any one, or combination, of the following: maintenance status, fault, fuel reserve.

18. A device according to any one of claims 14 to 17 wherein the device is arranged to control a resource comprising an electricity generation resource.

19. A central processing means for use with at least one distributed resource control device according to any one of claims 14 to 18 comprising a processing means and an input-output (10) Interface, the processing means being in communication with the 10 interface, the 10 interface being arranged to receive data indicative of the operational status of the at least one distributed resource and the processing means being arranged to generate control data to be passed to the at least one distributed processing means dependent upon the content of the data indicative of the operational status of the at least one distributed resource.

20. Processing means according to claim 19 wherein the IO interface is arranged to provide a common interface with a plurality of distributed resource control devices.

21. Processing means according to either of claims 19 or 20 wherein the processing means is arranged to receive data from each of plurality of different distributed resources.

22. Processing means according to any one of claims 19 to 21 wherein the processing means is arranged to generate control data corresponding to a substantially optimal usage pattern of distributed resources from the data indicative of the operating status of the at least one distributed resource and to control the input of at least one of the distributed resources into a distribution network in accordance with the substantially optimal usage pattern.

23. Processing means according to any one of claims 19 to 22 wherein the processing means is arranged to compare data relating to the current use of the distributed resources with entries in a data structure relating to historical, or projected, use of the distributed resources in order to generate control data indicative of a substantially optimal projected usage pattern of the distributed resources.

24. Processing means according to any one of claims 19 to 23 wherein the processing means comprise a data structure comprising data entries relating to the output capacity, usage restrictions, maintenance schedules of at least one of the distributed resources

25. Processing means according to claim 24 wherein the processing means is arranged to process at least some of said data entries when generating control data indicative of either, or both, of substantially optimal usage or projected usage pattern of the distributed resources.

26. A method of controlling a distributed resource comprising the steps of:
i) collecting data relating to a number of operating parameters of the resource;
ii) processing said data to determine the operational status of the resource, local to the resource;
iii) generating status data indicative of the operational status of the resource based upon the processing of step (ii), local to the resource;
iv) transmitting the status data via a network to a central processor unit, the central processor unit being arranged to receive status data from at least one of a plurality of distributed resources;
v) determining at the central processor unit a sub-set of the plurality of distributed resources are required to satisfy either a current or a projected demand for the resources;
vi) generating control data for at least one of the plurality of distributed resources, local to the central processor unit;
vii) transmitting control data relevant to the resource via the network; and
viii) operating the resource selectively, dependent upon the control data transmitted in step(vii).

27. The method of claim 26 comprising providing the resource in the form of an electricity supply resource.

28. The method of either claim 26 or claim 27 comprising presenting a common interface between each of the plurality of distributed resources and the central processor unit.

29. The method of any one of claims 26 to 28 comprising comparing the data of step (ii) to entries in a data structure at step (ii).

30. The method of any one of claims 26 to 29 comprising transmitting a reduced set of data indicative of operating of the resource in step (iv).

31. The method of any one of claims 26 to 30 comprising transmitting presence data in step (iv).

32. The method of any one of claims 26 to 31 comprising generating control data corresponding to a substantially optimal usage pattern of distributed resources in step (vi).

33. The method of any one of claims 26 to 32 comprising controlling the input of the resource into a distribution network.

34. The method of any one of claims 26 to 33 comprising comparing data relating to the current use of distributed resources with entries in a data structure relating to historical, or projected, use of the distributed resources and generating control data corresponding to a substantially optimal projected usage pattern of distributed resources in step (vi).

35. The method of any one of claims 26 to 34 comprising generating control data indicative of either, or both, of substantially optimal usage patterns of the distributed resources with reference to data entries in a data structure corresponding to at least one of the following: output capacity, usage restrictions, maintenance schedules.
